# EUROPÄISCHE PATENTANMELDUNG

(11) **EP 3 477 159 A1**
(43) Veröffentlichungstag der Anmeldung: **01.05.2019**
(21) Anmeldenummer: 17198538.5
(22) Anmeldetag: 26.10.2017
(51) Int. Cl.: F16H 61/02, F16H 61/00

(54) **HYDRAULIKSYSTEM FÜR EIN KRAFTFAHRZEUGGETRIEBE**

(71) Anmelder: ZF Friedrichshafen AG, 88046 Friedrichshafen (DE)
(72) Erfinder: Novak, Rainer, 6900 Bregenz (AT); Pfleger, Tobias, 88677 Markdorf (DE)

(57) **Zusammenfassung**

Hydrauliksystem (HY) für ein Kraftfahrzeuggetriebe (G) mit zumindest einer Pumpe (P), zwei Pumpenausgangsleitungen (P1, P2) zur Versorgung eines ersten und eines zweiten Druckkreises (1, 2) und einem elektromagnetisch betätigten ersten Drucksteuerventil (EDS1), dessen Eingang (EDS11) mit dem ersten Druckkreis (1) und dessen Ausgang (EDS12) mit einer ersten Steuerfläche (PVC) eines federbelasteten Absperrventils (PV) verbunden ist, wobei das Absperrventil (PV) dazu eingerichtet ist im unbetätigten Zustand die zweite Pumpenausgangsleitung (P2) mit dem zweiten Druckkreis (2) zu verbinden und im über die erste Steuerfläche (PVC) betätigten Zustand die zweite Pumpenausgangsleitung (P2) vom zweiten Druckkreis (2) zu trennen, Kraftfahrzeuggetriebe (G) mit einem solchen Hydrauliksystem (HY) sowie Antriebsstrang mit einem solchen Kraftfahrzeuggetriebe (G).

## Beschreibung

Die Erfindung betrifft ein Hydrauliksystem für ein Kraftfahrzeuggetriebe. Die Erfindung betrifft ferner ein Kraftfahrzeuggetriebe mit einem solchen Hydrauliksystem, sowie einen Antriebsstrang mit einem solchen Kraftfahrzeuggetriebe.

Ein Kraftfahrzeuggetriebe bezeichnet hier insbesondere ein mehrgängiges oder stufenloses Getriebe, mittels dem eine Vielzahl von Übersetzungsverhältnissen zwischen einer Antriebswelle und einer Abtriebswelle des Getriebes schaltbar sind. Derartige Getriebe finden vor allem in Kraftfahrzeugen Anwendung, um die Drehzahl- und Drehmomentabgabecharakteristik einer Antriebseinheit den Fahrwiderständen des Fahrzeugs in geeigneter Weise anzupassen.

Die Patentanmeldung DE 103 18 152 A1 beschreibt eine Ölversorgungseinrichtung für einen Hydraulikkreislauf eines Fahrzeuggetriebes. Dabei sind eine erste und eine zweite Pumpe vorgesehen, welche von verschiedenen Wellen angetrieben werden. Die zweite Pumpe dient zur Ölversorgung eines Hochdruckkreises. Die erste Pumpe dient ab Erreichung eines Grenzdrucks im Hochdruckkreis zur Ölversorgung eines Niederdruckkreises. Dazu ist ein vom Hochdruckkreis gesteuertes Drucksteuerventil vorgesehen, welches eine Versorgungsleitung des Niederdruckkreises absperrt. Unterhalb des Grenzdrucks versorgt die erste Pumpe den Hochdruckkreis, falls deren Ausgangsdruck größer ist als der Ausgangsdruck der zweiten Pumpe. Der Niederdruckkreis kann bedarfsweise mittels einer aufwändigen Schaltung aus dem Hochdruckkreis versorgt werden.

Die Patentanmeldung DE 10 2013 114 288 A1 beschreibt ein Hydraulikdruckzuführsystem eines Automatikgetriebes. Darin fördert eine einzige Flügelzellenpumpe Öl in zwei voneinander getrennte Ausgabeleitungen. Die erste Ausgabeleitung ist mit einem Eingang eines Hochdruckregelventils verbunden, welches den einem Hochdruckabschnitt zugeführten Hydraulikdruck regelt. Im Regelprozess überschüssiger Hydraulikdruck wird über eine Rückführleitung zu einem Niedrigdruckabschnitt geführt. Die zweite Ausgabeleitung ist mit einem Schaltventil verbunden, über welches die zweite Ausgabeleitung im unbetätigten Zustand des Schaltventils mit dem Eingang des Hochdruckregelventils verbunden ist. Das Schaltventil wird über die Rückführleitung betätigt, um die zweite Ausgabeleitung bedarfsweise von der ersten Ausgabeleitung zu trennen und mit dem Niederdruckabschnitt zu verbinden.

Es ist Aufgabe der Erfindung ein Hydrauliksystem für ein Kraftfahrzeuggetriebe bereitzustellen, welches sich durch eine gute Steuerbarkeit und einen kostengünstigen Aufbau auszeichnet.

Die Aufgabe wird gelöst durch die Merkmale des Patentanspruchs 1. Vorteilhafte Ausgestaltungen ergeben sich aus den abhängigen Ansprüchen, der Beschreibung sowie aus den Figuren.

Zur Lösung der Aufgabe wird ein Hydrauliksystem vorgeschlagen, welches zumindest eine Pumpe, eine erste Pumpenausgangsleitung zur Versorgung eines ersten Druckkreises, eine zweite Pumpenausgangsleitung zur Versorgung eines zweiten Druckkreises und ein erstes Drucksteuerventil aufweist. Das erste Drucksteuerventil ist elektromagnetisch betätigt und weist einen Eingang auf, welcher mit dem ersten Druckkreis verbunden ist. Das erste Drucksteuerventil ist dazu eingerichtet, an einem Ausgang einen vom Eingang reduzierten oder gleichen Druck bereitzustellen. Die Druckreduzierung erfolgt abhängig von einer Stromzufuhr zu einem Elektromagneten des ersten Drucksteuerventils.

Die beiden Pumpenausgangsleitungen können entweder durch eine Zweikreispumpe mit voneinander getrennten Druckbereichen oder durch zwei verschiedene Pumpen mit Hydraulikfluid versorgt werden. Bei der Ausführung mit Zweikreispumpe ist jede Pumpenausgangleitung mit einer der Druckbereiche der Pumpe verbunden. Bei einer Ausführung mit zwei verschiedenen Pumpen wird jede der Pumpenausgangsleitungen durch je eine Pumpe mit Hydraulikfluid versorgt.

Erfindungsgemäß weist das Hydrauliksystem ein federbelastetes Absperrventil auf, wobei der Ausgang des ersten Drucksteuerventils mit einer ersten Steuerfläche des Absperrventils verbunden ist. Das Absperrventil ist dazu eingerichtet, im unbetätigten Zustand die zweite Pumpenausgangsleitung mit dem zweiten Druckkreis zu verbinden. Unter einem unbetätigten Zustand wird hierbei ein Schaltzustand des Absperrventils verstanden, bei dem keine äußere Energie zur Steuerung des Absperrventils zugeführt wird. Das Absperrventil nimmt im unbetätigten Zustand jenen Schaltzustand ein, welcher sich durch die Federbelastung des Absperrventils ergibt. Wird das Absperrventil über die erste Steuerfläche betätigt, so wird die zweite Pumpenausgangsleitung vom zweiten Druckkreis getrennt, sodass das Absperrventil eine Sperrstellung einnimmt.

Durch Ansteuerung des elektromagnetisch betätigten ersten Drucksteuerventils kann die Versorgung des zweiten Druckkreises durch die zweite Pumpenausgangsleitung bei Bedarf unterbrochen werden. Dadurch kann der Volumenstrom der zweiten Pumpenausgangsleitung bei Bedarf für andere Zwecke zur Verfügung gestellt werden, beispielsweise zum Befüllen einer Anfahrkupplung des Kraftfahrzeuggetriebes unmittelbar nach einem Verbrennungsmotorstart.

Vorzugsweise ist ein Ventil vorgesehen, welches die zweite Pumpenausgangsleitung mit der ersten Pumpenausgangsleitung verbindet, falls der Druck in der zweiten Pumpenausgangsleitung den Druck in der ersten Pumpenausgangsleitung erreicht oder überschreitet. Das Ventil ist bevorzugt als Sitzventil ohne Federvorspannung ausgeführt. Befindet sich das Absperrventil in der Sperrstellung, so steigt der Druck in der zweiten Pumpenausgangsleitung an, bis das Ventil öffnet. Ist das Ventil offen, so wird der erste Druckkreis durch die Volumenströme beider Pumpenausgangsleitungen versorgt.

Durch die Aufteilung der Funktionen "Absperren des zweiten Druckkreises" und "Verbinden der Pumpenausgangsleitungen" auf zwei unterschiedliche Ventile können Druckschwankungen im ersten Hydraulikkreis vermieden werden, da die Energie zur Erfüllung der Funktion "Verbinden der Pumpenausgangsleitungen" aus dem Volumenstrom der zweiten Pumpenausgangsleitung bereitgestellt wird. Die Steuerbarkeit oder Regelbarkeit von Verbrauchern des ersten Druckkreises wird somit verbessert.

Reicht der über die erste Pumpenausgangsleitung zur Verfügung gestellte Volumenstrom zur Versorgung von Verbrauchern des ersten Druckkreises nicht aus, kann durch Ansteuerung des ersten Drucksteuerventils der Druck an der ersten Steuerfläche des Absperrventils erhöht werden, bis die Federvorspannung des Absperrventils überwunden ist, und das Absperrventil die Sperrstellung einnimmt. Nach Öffnen des Ventils werden die Volumenströme der beiden Pumpenausgangsleitungen kombiniert, sodass eine ausreichende Versorgung der Verbraucher des ersten Druckkreises sichergestellt wird.

Ein Wechsel des Absperrventils ausgehend von der Sperrstellung in den unbetätigten Zustand kann zu einem Absenken des Drucks in der zweiten Pumpenausgangsleitung führen, da der zweite Druckkreis nun wieder mit Hydraulikfluid versorgt wird. Vorzugsweise ist das Ventil dazu eingerichtet, die zweite Pumpenausgangsleitung von der ersten Pumpenausgangsleitung selbsttätig zu trennen, wenn der Druck in der zweiten Pumpenausgangsleitung geringer ist als der Druck in der ersten Pumpenausgangsleitung. Dadurch kann die Versorgung des ersten Druckkreises sichergestellt werden.

Gemäß einer möglichen ersten Ausführung des Hydrauliksystems kann das Absperrventil eine zweite und dritte Steuerfläche aufweisen, welche vorzugsweise gleich groß sind. Diese sind ständig verbunden und einander gegenüberliegend angeordnet. Und einer "ständigen Verbindung" wird in diesem Zusammenhang verstanden, dass stets der gleiche Druck auf diese beiden Steuerflächen wirkt. Durch die gegenüberliegende Anordnung der zweiten und dritten Steuerfläche ist die Betätigung des Absperrventils unabhängig vom im zweiten Druckkreis vorliegenden Druck möglich, sodass die Sperrstellung des Absperrventils auch bei einer hohen Volumenstromaufnahme des ersten Druckkreises gewählt werden kann.

Gemäß einer möglichen zweiten Ausführung des Hydrauliksystems weist das Absperrventil neben der ersten Steuerfläche genau eine weitere Steuerfläche auf. Die weitere Steuerfläche ist im unbetätigten Zustand des Absperrventils mit der zweiten Pumpenausgangsleitung verbunden, und in der Sperrstellung des Absperrventils von der zweiten Pumpenausgangsleitung getrennt. Eine solche Ausführung des Absperrventils reduziert dessen Herstellungsaufwand.

Vorzugsweise weist das Hydrauliksystem ein zweites Drucksteuerventil mit einer Steuerfläche auf, welche mit dem Ausgang des ersten Drucksteuerventils verbunden ist. Das zweite Drucksteuerventil dient zur Einstellung des Drucks im ersten Druckkreis, abhängig von dem an der Steuerfläche des zweiten Drucksteuerventils anliegenden Drucks. Erreicht oder überschreitet der im ersten Druckkreis vorliegende Druck einen Grenzwert, so werden die beiden Druckkreise über das zweite Drucksteuerventil miteinander verbunden. Durch Erhöhung des Drucks an der Steuerfläche des zweiten Drucksteuerventils wird dieser Grenzwert erhöht.

Da sowohl die erste Steuerfläche des Absperrventils als auch die Steuerfläche des zweiten Drucksteuerventils mit dem Ausgang des ersten Drucksteuerventils verbunden sind, besteht eine feste Beziehung zwischen dem Absperren der Versorgung des zweiten Druckkreises über das Absperrventil und dem im ersten Druckkreis vorliegenden Druck, sodass eine aufwändige Abstimmung entfallen kann.

Vorzugsweise umfasst das Hydrauliksystem ein federbelastetes Rückhalteventil, welches dazu eingerichtet ist einen Rückfluss von Hydraulikfluid aus dem ersten Druckkreis in die erste Pumpenausgangsleitung zu verhindern. Dadurch kann ein Leerlaufen des ersten Druckkreises verhindert werden, wenn die der ersten Pumpenausgangsleitung zugeordnete Pumpe nicht angetrieben wird.

Gemäß einer bevorzugten Ausgestaltung umfasst das Hydrauliksystem ein drittes Drucksteuerventil, welches wie das erste Drucksteuerventil elektromagnetisch betätigbar ist. Das dritte Drucksteuerventil ist dazu eingerichtet, an einem Ausgang einen vom Eingang reduzierten oder gleichen Druck bereitzustellen. Die Druckreduzierung erfolgt abhängig von einer Stromzufuhr zu einem Elektromagneten des dritten Drucksteuerventils. Der Eingang des dritten Drucksteuerventils ist mit dem ersten Druckkreis verbunden. Der Ausgang des dritten Drucksteuerventils ist mit einer Steuerfläche eines federbelasteten Proportionalventils verbunden. Das Proportionalventil dient zur schaltbaren Verbindung eines Abschnitts des zweiten Druckkreises mit dessen Versorgungsleitung. Wird über das dritte Steuerventil an der Steuerfläche des Proportionalventils ein ausreichend hoher Druck bereitgestellt, so wird der genannte Abschnitt des zweiten Druckkreises mit Hydraulikfluid versorgt. Im unbetätigten Zustand, bzw. mit unzureichend hohem Druck an der Steuerfläche, wird der genannte Abschnitt vom zweiten Kreis abgetrennt.

Das Hydrauliksystem kann eine elektronische Steuereinheit umfassen, mittels der zumindest das erste Drucksteuerventil gesteuert werden kann. Die Steuereinheit kann mit mehreren Sensoren und/oder anderen Steuereinheiten verbunden sein, und ist dazu eingerichtet empfangene Signale zu verarbeiten, und Stellbefehle abhängig von Kennfeldern oder Modelle an das erste Drucksteuerventil und gegebenenfalls an weitere Stellglieder des Hydrauliksystems auszulösen.

Das Hydrauliksystem kann Bestandteil eines Kraftfahrzeuggetriebes sein. Vorzugsweise ist der erste Druckkreis zur hydraulischen Betätigung von zumindest einer Kupplung und/oder zumindest eines Schaltzylinders des Kraftfahrzeuggetriebes vorgesehen. Derartige hydraulischer Verbraucher benötigen üblicherweise ein definiertes Hydraulikfluidvolumen und einen definierten Hydraulikdruck. Der zweite Druckkreis ist vorzugsweise zur Kühlung der zumindest einen Kupplung vorgesehen. Eine solche hydraulische Kühlung benötigt üblicherweise einen definierten Volumenstrom bei im Vergleich zum ersten Druckkreis geringerem Druckbedarf. Durch diese Zuordnung der hydraulischen Verbraucher zu den beiden Druckkreisen weist das Hydrauliksystem einen geringen Energiebedarf auf.

Der über das Proportionalventil zuschaltbare, bzw. abtrennbare Abschnitt des zweiten Druckkreises ist vorzugsweise einer Kühlung der zumindest einen Kupplung zugeordnet. Die Anbindung dieses Kupplungs-Kühl-Abschnitts an die Versorgung des zweiten Druckkreises erfolgt bevorzugt nur im Schlupfbetrieb der zumindest einen Kupplung. Eine Kühlung im geöffneten oder geschlossenen Zustand der Kupplung würde die Schleppverluste des Kraftfahrzeuggetriebes erhöhen.

Vorzugsweise weist das Hydrauliksystem ein federbelastetes Parksperrenventil auf. Mittels des Parksperrenventils kann ein hydraulisch wirkender Parksperren-Aktuator eine Parksperre des Kraftfahrzeuggetriebes betätigen. Der Versorgungsanschluss des Parksperrenventils ist vorzugsweise mit dem ersten Druckkreis ständig verbunden. Eine Steuerfläche des Parksperrenventils ist vorzugsweise mit dem Ausgang eines Drucksteuerventils verbunden, bevorzugt mit dem Ausgang des dritten Drucksteuerventils.

Das Kraftfahrzeuggetriebe kann Bestandteil eines Kraftfahrzeug-Antriebsstranges sein. Beispielsweise kann das Kraftfahrzeuggetriebe in einem Hybrid-Antriebsstrang verwendet werden. Eine elektrische Maschine zum Antrieb eines solchen Hybrid-Antriebsstranges kann Bestandteil des Kraftfahrzeuggetriebes sein. Der zweite Druckkreis des Hydrauliksystems eines solchen Kraftfahrzeuggetriebes kann eine Kühlung der elektrischen Maschine versorgen.

Ausführungsbeispiele der Erfindung sind nachfolgend anhand der beigefügten Figuren detailliert beschrieben. Es zeigen:
- Fig. 1: und 2 ein Hydrauliksystem gemäß einem ersten und zweiten Ausführungsbeispiel der Erfindung;
- Fig. 3: eine schematische Darstellung eines Kraftfahrzeuggetriebes mit dem Hydrauliksystem; und

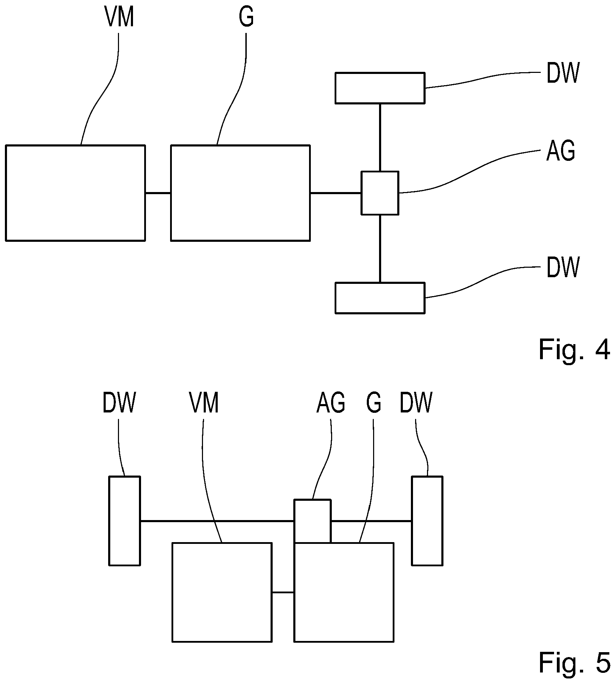

- Fig. 4: einen Antriebsstrang eines Kraftfahrzeugs mit dem Kraftfahrzeuggetriebe.

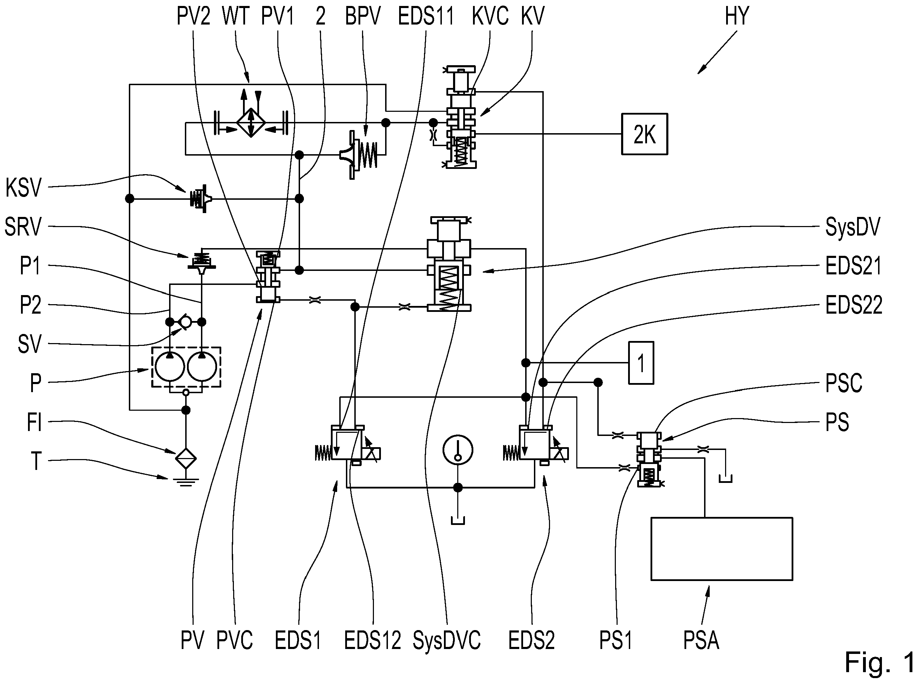

Fig. 1 zeigt ein Hydrauliksystem HY gemäß einem ersten Ausführungsbeispiel der Erfindung. Das Hydrauliksystem HY weist eine Zweikreispumpe P auf, welche zwei voneinander getrennte Druckbereiche aufweist. Einer der Druckbereiche ist mit einer ersten Pumpenausgangsleitung P1 verbunden. Der andere der Druckbereiche ist mit eine zweiten Pumpenausgangsleitung P2 verbunden. Die Zweikreispumpe P saugt Hydraulikfluid über einen Filter FI aus einem Tank T an, und fördert das Hydraulikfluid in die beiden Pumpenausgangsleitungen P1, P2. Das Fördervolumen der beiden Druckbereiche der Zweikreispumpe P kann voneinander unterschiedlich sein, wobei das der zweiten Pumpenausgangsleitung P2 zugeordnete Fördervolumen vorzugsweise größer ist als das der ersten Pumpenausgangsleitung P1 zugeordnete Fördervolumen.

Die erste Pumpenausgangsleitung P1 ist über ein federbelastetes Rückhalteventil SRV mit einem ersten Druckkreis 1 des Hydrauliksystems HY verbunden. In anderen Worten fördert einer der beiden Druckbereiche der Zweikreispumpe P über die erste Pumpenausgangsleitung P1 und über das Rückhalteventil SRV Hydraulikfluid in den ersten Druckkreis 1. Das Rückhalteventil SRV verhindert einen Rückfluss vom ersten Druckkreis 1 in die erste Pumpenausgangsleitung P1.

Die zweite Pumpenausgangsleitung P2 ist mit einer Drucktasche eines federbelasteten Absperrventils PV verbunden. Durch die Federvorspannung des Absperrventils PV ist die zweite Pumpenausgangsleitung P2 über das Absperrventil PV mit einem zweiten Druckkreis 2 des Hydrauliksystems HY verbunden. Das Absperrventil PV weist eine Steuerfläche PVC auf. Ein auf die Steuerfläche PVC wirkender Druck bewirkt eine Verschiebung eines Kolbens des Absperrventils PV entgegen dessen Federvorspannung. Ist der Druck auf die Steuerfläche PVC groß genug, wird die Verbindung zwischen der zweiten Pumpenausgangsleitung P2 und dem zweiten Druckkreis 2 unterbrochen.

Der auf die Steuerfläche PVC wirkende Druck wird durch ein erstes Drucksteuerventil EDS1 eingestellt. Ein Eingang EDS11 des ersten Drucksteuerventils EDS1 ist mit dem ersten Druckkreis 1 verbunden. Ein Ausgang des EDS12 des ersten Drucksteuerventils EDS1 ist mit der Steuerfläche PVC verbunden. Das erste Drucksteuerventil EDS1 ist elektromagnetisch gesteuert. Abhängig von der Stromzufuhr zu einem Elektromagneten des ersten Drucksteuerventils EDS1 kann der am Ausgang EDS12 wirkende Druck eingestellt werden. Bei der Einstellung überschüssiges Hydraulikfluid wird an den Tank T abgeführt.

Das Absperrventil PV weist eine zweite und dritte Steuerfläche PV1, PV2 auf, welche ständig verbunden sind, einander gegenüberliegen und gleich groß sind. Im unbetätigten Zustand des Absperrventils PV sind sowohl die zweite als auch die dritte Steuerfläche PV1, PV2 über die Drucktasche des Absperrventils PV mit der zweiten Druckausgangsleitung P2 verbunden. Durch die gegenüberliegende Anordnung der beiden Steuerflächen PV1, PV2 ist die zum Erreichen der Sperrstellung des Absperrventil PV erforderliche Betätigungskraft unabhängig vom im zweiten Druckkreis 2 vorliegenden Druck.

Der Ausgang EDS12 ist ferner mit einer Steuerfläche SysDVC eines zweiten Drucksteuerventils SysDV verbunden. Das zweite Drucksteuerventil SysDV ist federbelastet und ist zwischen dem Rückhalteventil SRV und dem ersten Druckkreis 1 angeordnet. Der im ersten Druckkreis 1 wirkende Druck wirkt der Federvorspannung des zweiten Drucksteuerventils SysDV entgegen. Ist der Druck im ersten Druckkreis 1 hoch genug, so wird der erste Druckkreis 1 mit dem zweiten Druckkreis 2 verbunden. Mittels des zweiten Drucksteuerventils SysDV ist somit der im ersten Druckkreis 1 wirkende Druck einstellbar. Ein auf die Steuerfläche SysDVC wirkender Druck wirkt in die gleiche Richtung auf einen Kolben des zweiten Drucksteuerventils SysDV wie dessen Federvorspannung. Eine Erhöhung des auf die Steuerfläche SysDVC wirkenden Drucks erhöht somit das Druckniveau des ersten Druckkreises 1. Oberhalb eines definierten Druckniveaus verbindet das zweite Drucksteuerventil SysDV den ersten Druckkreis 1 mit dem zweiten Druckkreis 2.

Wird die Verbindung zwischen der zweiten Pumpenausgangsleitung P2 und dem zweiten Druckkreis 2 mittels des Absperrventils PV unterbrochen, so steigt der Druck in der zweiten Pumpenausgangsleitung P2 an. Erreicht oder übersteigt der in der zweiten Pumpenausgangsleitung P2 vorliegende Druck den in der ersten Pumpenausgangsleitung P1 vorliegenden Druck, so öffnet ein Ventil SV eine Verbindung zwischen den beiden Pumpenausgangsleitungen P1, P2. Das Ventil SV schließt und öffnet druckabhängig, sodass das Ventil SV die Verbindung zwischen den beiden Pumpenausgangsleitungen P1, P2 wieder schließt, sobald der in der ersten Pumpenausgangsleitung P1 vorliegende Druck kleiner ist als der in der zweiten Pumpenausgangsleitung P2 vorliegende Druck.

Das Hydrauliksystem HY weist ferner ein drittes Drucksteuerventil EDS2 auf. Ein Eingang EDS21 des dritten Drucksteuerventils EDS2 ist mit dem ersten Druckkreis 1 verbunden. Ein Ausgang EDS22 des dritten Drucksteuerventils EDS2 ist mit einer Steuerfläche KVC eines federbelasteten Proportionalventils KV verbunden. Das dritte Drucksteuerventil EDS2 ist elektromagnetisch gesteuert. Abhängig von der Stromzufuhr zu einem Elektromagneten des dritten Drucksteuerventils EDS2 kann der am Ausgang EDS22 wirkende Druck eingestellt werden. Bei der Einstellung überschüssiges Hydraulikfluid wird an den Tank T abgeführt.

Der an der Steuerfläche KVC wirkende Druck wirkt der Federvorspannung des Proportionalventils KV entgegen. Überschreitet der an der Steuerfläche KVC wirkende Druck einen Grenzwert, wird ein Abschnitt 2K des zweiten Druckkreises 2 mit der Versorgung des zweiten Druckkreises 2 verbunden. Unterhalb dieses Grenzwerts sperrt das Proportionalventil KV den Abschnitt 2K von der Versorgung des zweiten Druckkreises 2 ab. In diesem Zustand verbindet das Proportionalventil KV den zweiten Druckkreis 2 mit einer Saugseite der Doppelkreispumpe P, um eine Saugaufladung der Doppelkreispumpe P bereitzustellen.

Vor dem Abschnitt 2K ist ein Wärmetauscher WT angeordnet. In den zweiten Druckkreis 2 einströmendes Hydraulikfluid wird über den Wärmetauscher WT Wärmeenergie entzogen. Übersteigt der Druckabfall am Wärmetauscher WT einen Grenzwert, so öffnet ein federbelastetes Bypassventil BPV eine Verbindung zwischen einem Zulauf und einem Ablauf des Wärmetauschers WT. Zwischen dem Zulauf des Wärmetauschers WT und der Saugaufladungsleitung ist ein federbelastetes Schutzventil KSV angeordnet. Das Schutzventil KSV öffnet, falls ein Druckunterschied zwischen dem Zulauf des Wärmetauschers WT und der Saugaufladungsleitung einen Grenzwert überschreitet.

Der Ausgang EDS22 des dritten Drucksteuerventils EDS2 ist ferner mit einer Steuerfläche PSC eines federbelasteten Parksperrenventils PS verbunden. Das Parksperrenventil PS dient zur Steuerung eines Aktuators PSA. Ein Versorgungsanschluss PS1 des Parksperrenventils PS ist mit dem ersten Druckkreis 1 verbunden. Der an der Steuerfläche PSC wirkende Druck wirkt der Federvorspannung des Parksperrenventils PS entgegen. Überschreitet der an der Steuerfläche PSC wirkende Druck einen Grenzwert, wird der erste Druckkreis 1 über das Parksperrenventil PS mit dem Aktuator PSA verbunden. Unterhalb dieses Grenzwerts wird der Aktuator PSA in den Tank T entlüftet.

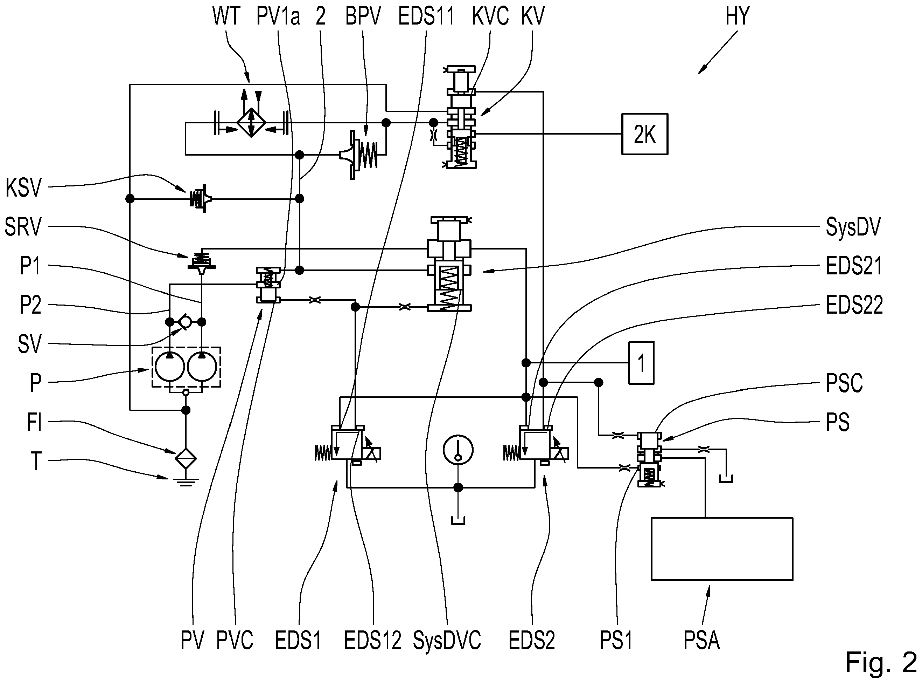

Fig. 2 zeigt ein Hydrauliksystem HY gemäß einem zweiten Ausführungsbeispiel der Erfindung, welches im Wesentlichen dem in Fig. 1 dargestellten ersten Ausführungsbeispiel entspricht. Lediglich das Absperrventil PV ist anders aufgebaut, und weist nun neben der ersten Steuerfläche PVC genau eine weitere Steuerfläche PV1a auf. Der an der weiteren Steuerfläche PV1a anliegende Druck wirkt zusammen mit der Federvorspannung des Absperrventils PV entgegen dem an der ersten Steuerfläche PVC anliegenden Druck.

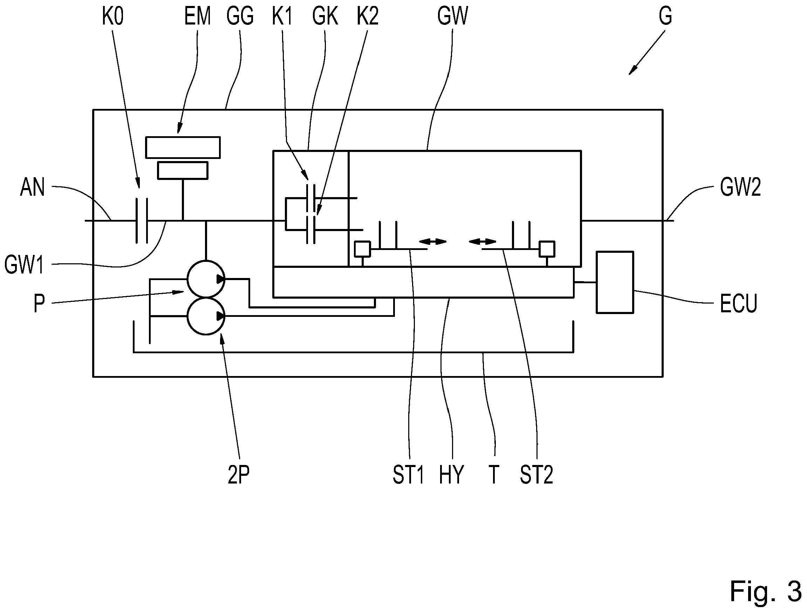

Fig. 3 zeigt eine schematische Darstellung eines Kraftfahrzeuggetriebes G mit dem Hydrauliksystem HY. Das Kraftfahrzeuggetriebe G weist eine Anschlusswelle AN auf, welche über eine Trennkupplung K0 mit einer Antriebswelle GW1 verbindbar ist. Ein Rotor einer elektrischen Maschine EM ist mit der Antriebswelle GW1 verbunden. Die Antriebswelle treibt eine Pumpe P und eine zweiten Pumpe 2P an. Die beiden Pumpen P, 2P dienen zur Druckversorgung des Hydrauliksystems HY. Anstelle der beiden Pumpen P, 2P kann eine Zweikreispumpe verwendet werden, wie in den Ausführungsbeispielen in Fig. 1 und Fig. 2 beschrieben. In gleicher Weise kann die Zweikreispumpe in Fig. 1 und Fig. 2 durch die zwei Pumpen P, 2P gemäß Fig. 3 ersetzt werden.

Das Kraftfahrzeuggetriebe G weist eine Kupplungsabschnitt GK auf, welcher eine erste Kupplung K1 und eine zweite Kupplung K2 beherbergt. Durch Schließen der ersten Kupplung K1 ist die Antriebswelle GW1 mit einem ersten Teilgetriebe verbindbar. Durch Schließen der zweiten Kupplung K2 ist die Antriebswelle GW1 mit einem zweiten Teilgetriebe verbindbar. In einem Gangwechselabschnitt GW sind mittels eines nicht dargestellten Radsatzes verschiedene Gangstufen zwischen den Teilgetrieben und einer Abtriebswelle GW2 ausbildbar. Die Gangstufen werden beispielhaft mittels zweier Schaltzylinder ST1, ST2 eingelegt, bzw. ausgelegt. Die Schaltzylinder ST1, ST2 werden mittels des ersten Druckkreises 1 des Hydrauliksystems HY betätigt. Der Abschnitt 2K des zweiten Druckkreises 2 ist zur Kühlung der beiden Kupplungen K1, K2 vorgesehen.

Auch die Trennkupplung K0 kann über den ersten Druckkreis 1 des Hydrauliksystems HY betätigt, bzw. über den Abschnitt 2K mit Hydraulikfluid gekühlt werden. Zudem kann die elektrische Maschine EM über den Abschnitt 2K mit Hydraulikfluid gekühlt werden.

Eine elektronische Steuereinheit ECU steuert die elektromagnetisch betätigten Drucksteuerventile EDS1, EDS2 des Hydrauliksystems HY. Die Steuereinheit ECU ist mit mehreren Sensoren und anderen Steuereinheiten verbunden, und ist dazu eingerichtet empfangene Signale zu verarbeiten, und Stellbefehle abhängig von Kennfeldern oder Modelle an die Drucksteuerventile EDS1, EDS2 und gegebenenfalls an weitere Stellglieder des Hydrauliksystems HY auszulösen.

### Bezuqszeichen

- HY: Hydrauliksystem
- G: Kraftfahrzeuggetriebe
- P: Pumpe
- 2P: Zweite Pumpe
- P1: Erste Pumpenausgangsleitung
- P2: Zweite Pumpenausgangsleitung
- 1: Erster Druckkreis
- 2: Zweiter Druckkreis
- 2K: Abschnitt
- EDS1: Erstes Drucksteuerventil
- EDS11: Eingang
- EDS12: Ausgang
- SysDV: Zweites Drucksteuerventil
- SysDVC: Steuerfläche
- EDS2: Drittes Drucksteuerventil
- EDS21: Eingang
- EDS22: Ausgang
- PV: Absperrventil
- PVC: Erste Steuerfläche
- PV1: Zweite Steuerfläche
- PV2: Dritte Steuerfläche
- PV1a: Weitere Steuerfläche
- SV: Ventil
- SRV: Rückhalteventil
- PS: Parksperrenventil
- PS1: Versorgungsanschluss
- PSC: Steuerfläche
- PSA: Aktuator
- WT: Wärmetauscher
- KSV: Schutzventil
- BPV: Bypassventil
- KV: Proportionalventil
- KVC: Steuerfläche
- FI: Filter
- T: Tank
- AN: Anschlusswelle
- K0: Trennkupplung
- GW1: Antriebswelle
- GW2: Abtriebswelle
- K1: Kupplung
- K2: Kupplung
- GK: Kupplungsabschnitt
- GW: Gangwechselabschnitt
- ST1: Schaltzylinder
- ST2: Schaltzylinder
- GG: Gehäuse
- ECU: Steuereinheit
- VM: Verbrennungsmotor
- AG: Differentialgetriebe
- DW: Antriebsrad

## Patentansprüche

1. Hydrauliksystem (HY) für ein Kraftfahrzeuggetriebe (G), wobei das Hydrauliksystem (HY) zumindest eine Pumpe (P), eine erste Pumpenausgangsleitung (P1) zur Versorgung eines ersten Druckkreises (1) des Hydrauliksystems (HY), eine zweite Pumpenausgangsleitung (P2) zur Versorgung eines zweiten Druckkreises (2) des Hydrauliksystems (HY), und ein elektromagnetisch betätigtes erstes Drucksteuerventil (EDS1) aufweist, dessen Eingang (EDS11) mit dem ersten Druckkreis (1) verbunden ist,
**dadurch gekennzeichnet, dass** ein Ausgang (EDS12) des erstes Drucksteuerventils (EDS1) mit einer ersten Steuerfläche (PVC) eines federbelasteten Absperrventils (PV) verbunden ist, wobei das Absperrventil (PV) dazu eingerichtet ist im unbetätigten Zustand die zweite Pumpenausgangsleitung (P2) mit dem zweiten Druckkreis (2) zu verbinden und im über die erste Steuerfläche (PVC) betätigten Zustand die zweite Pumpenausgangsleitung (P2) vom zweiten Druckkreis (2) zu trennen.

2. Hydrauliksystem (HY) nach Anspruch 1, **dadurch gekennzeichnet, dass** das Hydrauliksystem (HY) ein Ventil (SV) aufweist, welches dazu eingerichtet ist die zweite Pumpenausgangsleitung (P2) mit der ersten Pumpenausgangsleitung (P1) zu verbinden, falls der Druck in der zweiten Pumpenausgangsleitung (P2) den Druck in der ersten Pumpenausgangsleitung (P1) erreicht oder überschreitet.

3. Hydrauliksystem (HY) nach Anspruch 2, **dadurch gekennzeichnet, dass** das Ventil (SV) dazu eingerichtet ist die beiden Pumpenausgangsleitungen (P1, P2) selbsttätig voneinander zu trennen, falls der Druck in der ersten Pumpenausgangsleitung (P1) höher ist als der Druck in der zweiten Pumpenausgangsleitung (P2).

4. Hydrauliksystem (HY) nach einem der Ansprüche 1 bis 3, **dadurch gekennzeichnet, dass** das Absperrventil (PV) eine zweite und dritte Steuerfläche (PV1, PV2) aufweist, welche ständig verbunden sind und einander gegenüberliegen, wobei die zweite und dritte Steuerfläche (PV1, PV2) im unbetätigten Zustand des Absperrventils (PV) mit der zweiten Pumpenausgangsleitung (P2) verbunden sind, wobei die zweite Steuerfläche (PV2) im über die erste Steuerfläche (PVC) betätigten Zustand des Absperrventils (PV) von der zweiten Pumpenausgangsleitung (P2) getrennt ist.

5. Hydrauliksystem (HY) nach einem der Ansprüche 1 bis 3, **dadurch gekennzeichnet, dass** das Absperrventil (PV) neben der ersten Steuerfläche (PVC) genau eine weitere Steuerfläche (PV1a) aufweist, wobei die weitere Steuerfläche (PV1a) im unbetätigten Zustand des Absperrventils (PV) mit der zweiten Pumpenausgangsleitung (P2) verbunden sind, wobei die weitere Steuerfläche (PV2a) im über die erste Steuerfläche (PVC) betätigten Zustand des Absperrventils (PV) von der zweiten Pumpenausgangsleitung (P2) getrennt ist.

6. Hydrauliksystem (HY) nach einem der vorangehenden Ansprüche, **dadurch gekennzeichnet, dass** der Ausgang (EDS12) des erstes Drucksteuerventils (EDS1) ferner mit einer Steuerfläche (SysDVC) eines zweiten Drucksteuerventils (SysDV) verbunden ist, welches dazu eingerichtet ist den im ersten Druckkreis (1) vorliegenden Druck anhand des an der Steuerfläche (SysDVC) des zweiten Drucksteuerventils (SysDV) anliegenden Drucks einzustellen.

7. Hydrauliksystem (HY) nach einem der vorangehenden Ansprüche, **dadurch gekennzeichnet, dass** die Pumpe (P) als eine Zweikreispumpe mit einem ersten und einem zweiten Druckbereich ausgebildet ist, wobei der erste Druckbereich mit der ersten Pumpenausgangsleitung (P1) und der zweite Druckbereich mit der zweiten Pumpenausgangsleitung (P2) verbunden ist.

8. Hydrauliksystem (HY) nach einem der Ansprüche 1 bis 6, **dadurch gekennzeichnet, dass** die Pumpe (P) zur Versorgung der ersten Pumpenausgangsleitung (P1) vorgesehen ist, wobei eine zweite Pumpe (2P) zur Versorgung der zweiten Pumpenausgangsleitung (P2) vorgesehen ist.

9. Hydrauliksystem (HY) nach einem der Ansprüche 1 bis 8, **dadurch gekennzeichnet, dass** das Hydrauliksystem (HY) ein federbelastetes Rückhalteventil (SRV) aufweist, welches dazu eingerichtet ist einen Rückfluss von Hydraulikfluid aus dem ersten Druckkreis (1) in die erste Pumpenausgangsleitung (1) zu verhindern.

10. Hydrauliksystem (HY) nach einem der Ansprüche 1 bis 9, **dadurch gekennzeichnet, dass** das Hydrauliksystem (HY) ein drittes Drucksteuerventil (EDS2) aufweist, welches elektromagnetisch betätigbar ist, wobei ein Eingang (EDS21) des dritten Drucksteuerventils (EDS2) mit dem ersten Druckkreis (1) verbunden ist, wobei ein Ausgang (EDS22) des dritten Drucksteuerventils (EDS2) mit einer Steuerfläche (KVC) eines federbelasteten Proportionalventils (KV) verbunden ist, welches dazu eingerichtet ist einen Abschnitt (2K) des zweiten Druckkreises (2) abhängig vom an der Steuerfläche (KVC) des Proportionalventils (KV) wirkenden Druck mit der Versorgung des zweiten Druckkreises (2) zu verbinden.

11. Hydrauliksystem (HY) nach einem der Ansprüche 1 bis 10, **dadurch gekennzeichnet, dass** das Hydrauliksystem (HY) eine elektronische Steuereinheit (ECU) zur Steuerung zumindest des ersten Drucksteuerventils (EDS1) aufweist.

12. Kraftfahrzeuggetriebe (G), **gekennzeichnet durch** ein Hydrauliksystem (HY) nach einem der vorangehenden Ansprüche.

13. Kraftfahrzeuggetriebe (G) nach Anspruch 12, **dadurch gekennzeichnet, dass** der erste Druckkreis (1) des Hydrauliksystems (HY) zur Betätigung von zumindest einer Kupplung (K0, K1, K2) und/oder zumindest eines Schaltzylinders (ST1, ST2) des Kraftfahrzeuggetriebes (G) vorgesehen ist, wobei der zweite Druckkreis (2) des Hydrauliksystems (HY) zur Kühlung der zumindest einen Kupplung (K0, K1, K2) vorgesehen ist.

14. Kraftfahrzeuggetriebe (G) nach Anspruch 12 oder Anspruch 13, **dadurch gekennzeichnet, dass** eine Parksperre des Kraftfahrzeuggetriebes (G) durch einen hydraulisch wirkenden Parksperren-Aktuator (PSA) betätigbar ist, wobei der Parksperren-Aktuator (PSA) durch ein Parksperrenventil (PS) steuerbar ist, wobei ein Versorgungsanschluss (PS1) des Parksperrenventil (PS) mit dem ersten Druckkreis (1) ständig verbunden ist.

15. Kraftfahrzeuggetriebe (G) nach Anspruch 14 unter Rückbezug auf Anspruch 10, **dadurch gekennzeichnet, dass** der Ausgang (EDS22) des dritten Drucksteuerventils (EDS2) mit einer Steuerfläche (PSC) des Parksperrenventil (PS) verbunden ist.

16. Antriebsstrang für ein Kraftfahrzeug, **gekennzeichnet durch** ein Kraftfahrzeuggetriebe nach zumindest einem der Ansprüche 12 bis 15.
